# FASCICULE DE BREVET EUROPEEN

(11) **EP 2 996 930 B1**
(45) Date de publication et mention de la délivrance du brevet: **06.12.2017**
(21) Numéro de dépôt: 14729419.3
(22) Date de dépôt: 13.05.2014
(51) Int. Cl.: B62M 3/08, B62M 6/50

(54) **PEDALE DE BICYCLETTE MUNIE D'AU MOINS UN CAPTEUR**
FAHRRADPEDAL MIT MINDESTENS EINEM SENSOR
BICYCLE PEDAL PROVIDED WITH AT LEAST ONE SENSOR

(30) Priorité: 14.05.2013 FR 1354290
(43) Date de publication de la demande: 23.03.2016
(73) Titulaire: Sensix, 86000 Poitiers (FR)
(72) Inventeur: BOUCHER, Mathieu, F-86000 Poitiers (FR); BENKHEMIS, Inès, F-86000 Poitiers (FR)
(74) Mandataire: Cabinet Laurent & Charras
(86) Numéro de dépôt international: PCT/FR2014/051109
(87) Numéro de publication internationale: WO 2014/184485

(56) Documents cités:
- EP-A1- 1 661 606
- WO-A1-2010/109397
- WO-A1-2012/038677
- DE-U1- 29 819 062
- US-A1- 2007 137 307

## Description

### DOMAINE TECHNIQUE

La présente invention concerne une pédale de bicyclette munie d'au moins un capteur, communément appelée pédale dynamométrique permettant une analyse précise du pédalage d'un cycliste.

### ART ANTERIEUR

Dans le domaine du cyclisme, il est bien connu d'utiliser des pédales dites dynamométriques permettant d'étudier les différentes variables du pédalage telles que la fréquence, la puissance, les forces appliquées par les membres inférieurs du cycliste, l'efficacité ou le rendement mécanique. On entend par « pédale dynamométrique » aussi bien les pédales dynamométriques proprement dites que les pédales associées à un dispositif dynamométrique permettant de mesurer les efforts appliqués sur la pédale

L'utilité de ces pédales dynamométriques est qu'elles peuvent, entre autres, contribuer à minimiser les risques de blessure des genoux en permettant de constater les dissymétries qui peuvent exister entre les deux membres inférieurs, notamment en cas de mauvais alignement entre le cycliste et la bicyclette. Elles permettent également de déterminer la fréquence de pédalage correspondant à une efficacité maximale.

De nombreuses pédales dynamométriques ont été décrites dans l'art antérieur.

C'est le cas notamment de la demande de brevet allemand DE 101 58 600 qui décrit une pédale dynamométrique permettant l'obtention de certaines données utiles pour le calcul des efforts appliqués sur une pédale. Cette pédale comprend des moyens de mesure de la déformation de l'axe de pédale à l'aide de jauges de déformation fixées sur celui-ci.

Ce type de pédale ne permet de mesurer que deux composantes de la force appliquée sur la pédale. Il s'agit de la force perpendiculaire à la surface d'appui de la pédale et de la force parallèle à celle-ci. Les déformations n'ayant cependant pas lieu uniquement dans la direction des mesures effectuées par les jauges de déformation, il est nécessaire de déterminer en outre une matrice de calibrage afin de calculer les forces en fonction des déformations mesurées.

On connait également la demande de brevet allemand DD-294,673 qui décrit une pédale comprenant des cellules de mesure de force logées dans le corps de la pédale, lesdites cellules permettant de mesurer l'intensité de la pression exercée par le cycliste sur la pédale. Complémentairement, des cellules de mesure d'angle mesurent l'écart angulaire entre la direction générale du plan d'appui de la pédale et l'axe du pivot sur lequel cette dernière est montée. Cette mesure de l'écart angulaire permet ensuite d'en déduire l'angle d'application de la force de pédalage sur la surface d'appui de la pédale.

Toutefois, l'ensemble du dispositif de mesure devant être logé dans la cavité interne de la pédale, les dimensions générales de celle-ci doivent être augmentées. Il s'en suit une moindre transmission des efforts du cycliste à l'essieu du pédalier, et donc une diminution du rendement.

La demande de brevet allemand DE-3,722,728 décrit quant à elle une pédale qui comprend des jauges de contrainte transformant en signaux électriques les efforts mécaniques auxquels est soumise la manivelle de pédalier, de même que des capteurs de déplacement, l'ensemble des données étant ensuite transmis à un micro-ordinateur pour l'évaluation des performances du cycliste.

Ce type de système ne permet toutefois pas de connaître la direction d'application de la force de pédalage sur le plan d'appui de la pédale, seul le moment angulaire, autrement dit la composante de la force dirigée dans la direction générale d'avance, étant enregistré, puis traité.

Une pédale dynamométrique est également connue de la demande de brevet français FR 2 724 728 qui décrit des moyens de mesure des efforts appliqués sur la pédale, ces moyens étant constitués par une unité de mesure de la position angulaire de la manivelle de pédalier et par une unité de mesure de force constituée de quatre jauges de déformation fixées sur le pourtour de l'axe de pédale et décalées de 90° d'une jauge à la suivante.

Cependant, ces pédales de l'art antérieur ne sont pas conçues pour l'évaluation de la composante transversale de la force appliquée contre la pédale, alors que cette composante transversale représente une variable importante dans l'analyse biomécanique de pédalage, d'autant plus que les forces transversales produisent un couple de force absolument inutile à la propulsion et constituent ainsi des forces perdues que l'on souhaite minimiser.

Afin de remédier à ces inconvénients, on a déjà imaginé une pédale permettant une mesure des trois composantes des forces appliquées sur les pédales. C'est le cas de la demande de brevet français FR 2 878 328 qui décrit une pédale comportant un corps de pédale pourvu de moyens de fixation d'une chaussure de cycliste, un logement recevant un axe de pédale relié à une manivelle de pédalier. Plusieurs jauges de déformation sont disposées de part et d'autre de l'axe de pédale, ladite pédale étant associée à des moyens de mesure de l'angle de rotation de la manivelle. Le corps de pédale est composé d'une partie supérieure comportant les moyens de fixation et d'une partie inférieure comportant le logement. Les parties supérieure et inférieure du corps de pédale sont séparées l'une de l'autre par un interstice et reliées l'une à l'autre par des organes de liaison verticaux portant des jauges de déformation aptes à mesurer les efforts transversaux.

Ce type de pédale présente néanmoins l'inconvénient de n'être adapté qu'à un seul type de cale d'une chaussure de cycliste. De plus, elle permet de mesurer que les trois composantes appliquées sur les pédales, à savoir les forces tangentielles s'exerçant sur l'axe de pédale dans deux directions et la composante transversale. Document WO 2010/109397 A1 montre le préambule de la revendication 1.

### EXPOSE DE L'INVENTION

L'un des buts de l'invention est donc de remédier à ces inconvénients en proposant une pédale de bicyclette de type dynamométrique de conception simple et peu onéreuse, permettant la mesure de 6 composantes, à savoir trois composantes de force et trois composantes de moment, et dont le support de chaussure peut être aisément adapté en fonction de la forme de la cale de la chaussure du cycliste.

A cet effet et conformément à l'invention, il est proposé une pédale de bicyclette ou similaire comprenant un axe de pédale avec un axe de pédale central, un corps de pédale et un support de chaussure solidaire dudit corps de pédale, ledit support de chaussure étant apte à coopérer avec une cale de forme correspondante solidaire d'une chaussure de cycliste, et au moins un capteur ; ladite pédale est remarquable en ce que le corps de pédale présente une forme cylindrique dont le fond est fermé et dont le bord supérieure comporte une collerette annulaire à la périphérie de laquelle s'étendent deux anses, diamétralement opposées et respectivement munies d'un évidement circulaire dans lequel s'étend l'axe de la pédale, ledit axe de la pédale s'étendant perpendiculairement à l'axe de révolution du corps de pédale, et en ce qu'elle comporte un corps d'épreuve s'étendant dans le corps de pédale cylindrique et portant au moins 6 jauges de déformation.

Ledit corps d'épreuve est constitué de deux anneaux concentriques reliés par des entretoises.

De préférence, ledit corps d'épreuve est constitué de deux anneaux concentriques par trois paires d'entretoises, chaque paire d'entretoise présentant une forme de V et s'étendant dans un plan sensiblement parallèle à l'axe de révolution des anneaux.

De manière avantageuse, chaque entretoise est équipée d'une jauge de déformation.

Par ailleurs, ladite pédale comporte une bride constituée d'une pièce circulaire apte à fermer le corps de pédale.

Ladite bride comporte sur sa face supérieure une gorge s'étendant diamétralement, ladite gorge recevant l'axe de pédale.

De plus, ladite bride comporte des moyens de fixation du support de chaussure.

Accessoirement, la pédale suivant l'invention comporte au moins un codeur de position angulaire.

Ledit codeur de position angulaire s'étend dans une embase sensiblement cylindrique solidaire d'une anse du corps de pédale.

Par ailleurs, les jauges de déformation sont connectées à une carte électronique, s'étendant dans le corps de pédale et comportant six amplificateurs d'instrumentation permettant de délivrer les signaux de mesure sur une plage de tension comprise entre +10V et -10V

Ladite carte électronique comporte un connecteur faisant saillie du corps de pédale à travers une lumière afin de permettre un transfert et/ou une lecture des mesures enregistrées au moyen d'un dispositif connecté à ladite carte électronique.

### DESCRIPTION SOMMAIRE DES FIGURES

D'autres avantages et caractéristiques ressortiront mieux de la description qui va suivre de plusieurs variantes d'exécution, données à titre d'exemples non limitatifs, de la pédale dynamométrique conforme à l'invention, en référence aux dessins annexés sur lesquels :
- la figure 1 est une vue en perspective de la pédale dynamométrique suivant l'invention,
- la figure 2 est une vue en perspective éclatée de la pédale dynamométrique suivant l'invention,
- la figure 3 est une vue en coupe transversale de la pédale dynamométrique suivant l'invention,
- la figure 4 est une vue en coupe longitudinale de la pédale dynamométrique suivant l'invention.

### DESCRIPTION DETAILLEE DE L'INVENTION

Dans la suite de la description du suivant l'invention, les mêmes références numériques désignent les mêmes éléments. Les différentes vues ne sont pas nécessairement tracées à l'échelle.

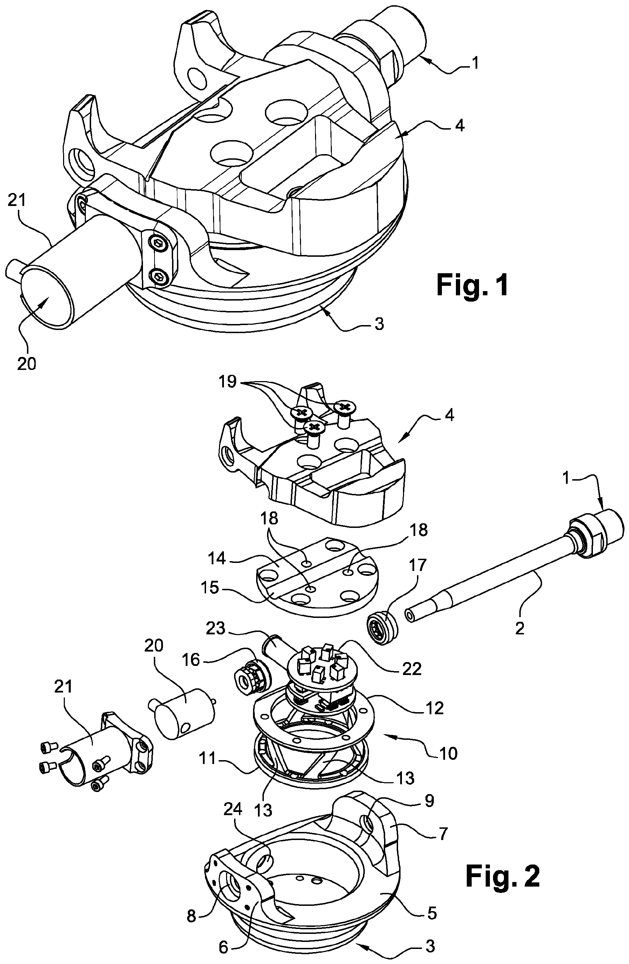

En référence aux figures 1 à 4, la pédale de bicyclette suivant l'invention comprend un axe de pédale (1) avec un axe de pédale central (2), un corps de pédale (3) et un support de chaussure (4) solidaire dudit corps de pédale (3). Ledit support de chaussure (4) consiste dans des moyens de fixation d'une chaussure de cycliste, non représentée sur les figures, comportant une cale ou une plaque qui est fixée sous la chaussure du cycliste pour être engagé avec ledit support de chaussure (4). L'axe de pédale (1) est apte à être relié à une manivelle de pédalier non représenté sur les figures.

Ledit corps de pédale (3) présente une forme sensiblement cylindrique dont le fond est fermé et dont le bord supérieur comporte une collerette annulaire (5) à la périphérie de laquelle s'étendent deux anses (6) et (7), diamétralement opposées et respectivement munies d'un évidement circulaire (8) et (9) dans lequel s'étend l'axe de pédale (1), ledit axe de pédale (1) s'étendant perpendiculairement à l'axe de révolution du corps de pédale (3).

Par ailleurs en référence aux figures 2 à 4, la pédale suivant l'invention comporte une pièce dite corps d'épreuve (10) s'étendant dans le corps de pédale cylindrique (3) et portant au moins 6 jauges de déformation. Ledit corps d'épreuve est constitué de deux anneaux (11,12) concentriques, un anneau inférieur (11) et un anneau supérieur (12), reliés par trois paires d'entretoises (13), chaque paire d'entretoises (13) présentant une forme de V et s'étendant dans un plan sensiblement parallèle à l'axe de révolution des anneaux (11,12), chaque entretoise étant équipée d'une jauge de déformation. L'anneau inférieur (11) est solidarisé au fond du corps de pédale (3) par des vis et l'anneau supérieur (12) est solidarisé au moyen de vis à une bride (14) constituée d'une pièce circulaire apte à fermer le corps de pédale (3).

En référence à la figure 2, ladite bride (14) comporte sur sa face supérieure une gorge (15) s'étendant diamétralement, ladite gorge (15) étant apte à recevoir l'axe de pédale (1). On notera que l'axe de pédale (1) est monté sur les anses (6) et (7) au moyen de paliers (16) et (17). De plus, ladite bride (14) comporte des moyens de fixation du support de chaussure (4). Lesdits moyens de fixation consistent dans des trous taraudés (18) formés sur la face supérieure de la bride (14) aptes à recevoir des vis (19).

Par ailleurs, en référence aux figures 1 à 3, la pédale suivant l'invention comporte un codeur de position angulaire (20). Ledit codeur de position angulaire (20) s'étend dans une embase (21) sensiblement cylindrique solidaire de l'anse (6) du corps de pédale (3).

De plus, en référence aux figures 2 à 4, les jauges de déformation sont connectées à une carte électronique (22), s'étendant dans le corps de pédale (3), entre les anneaux (11) et (12) du corps d'épreuve, et comportant six amplificateurs d'instrumentation permettant de délivrer les signaux de mesure sur une plage de tension comprise entre +10V et -10V.

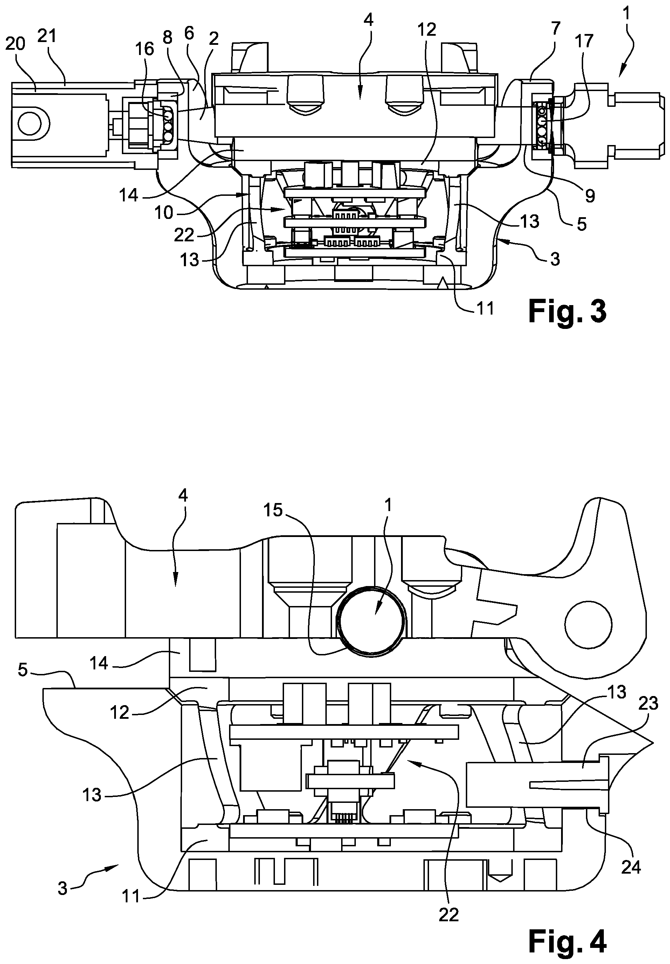

De manière avantageuse, en référence aux figures 2 et 4, ladite carte électronique (22) comporte un connecteur (23) faisant saillie du corps de pédale (3) à travers une lumière (24) afin de permettre une lecture des mesures au moyen d'un dispositif, non représenté sur les figures, connecté à ladite carte électronique (22). Ledit dispositif de lecture pourra consister dans tout type de dispositif bien connu de l'homme du métier tel qu'un PDA par exemple.

On observera que le support de chaussure (4) pourra consister dans tous moyens de fixation d'une chaussure de cycliste bien connu de l'homme du métier tels que les systèmes vendus sous les marques SHIMANO ou LOOK par exemple. Un tel support de chaussure pourra notamment consister dans le système décrit dans la demande de brevet européen EP 1 293 424 déposé par la société SHIMANO.

Enfin, il est bien évident que les exemples que l'on vient de donner ne sont que des illustrations particulières et en aucun cas limitatif quant au domaine d'application de l'invention.

## Revendications

1. Pédale de bicyclette ou similaire comprenant un axe de pédale (1) avec un axe de pédale central (2), un corps de pédale (3) et un support de chaussure (4) solidaire dudit corps de pédale (3), ledit support de chaussure (4) étant apte à coopérer avec une cale de forme correspondante solidaire d'une chaussure de cycliste, et au moins un capteur, ***caractérisée* en ce que** le corps de pédale (3) présente une forme cylindrique dont le fond est fermé et dont le bord supérieur comporte une collerette annulaire (5) à la périphérie de laquelle s'étendent deux anses (6,7), diamétralement opposées et respectivement munies d'un évidement circulaire (8,9) dans lequel s'étend l'axe de pédale (1), ledit axe de pédale (1) s'étendant perpendiculairement à l'axe de révolution du corps de pédale (3), et **en ce qu'**elle comporte un corps d'épreuve (10) s'étendant dans le corps de pédale cylindrique (3) et portant au moins 6 jauges de déformation.

2. Pédale suivant la revendication précédente ***caractérisé* en ce que** le corps d'épreuve (10) est constitué de deux anneaux (11,12) concentriques reliés par des entretoises (13).

3. Pédale suivant la revendication 2 ***caractérisée* en ce que** le corps d'épreuve (3) est constitué de deux anneaux concentriques (11,12) reliés par trois paires d'entretoises (13), chaque paire d'entretoises (13) présentant une forme de V et s'étendant dans un plan sensiblement parallèle à l'axe de révolution des anneaux (11,12).

4. Pédale suivant l'une quelconque des revendications 2 ou 3 ***caractérisée* en ce que** chaque entretoise (13) est équipée d'une jauge de déformation.

5. Pédale suivant l'une quelconque des revendications 1 à 4 ***caractérisée* en ce qu'**elle comporte une bride (14) constituée d'une pièce circulaire apte à fermer le corps de pédale (3).

6. Pédale suivant la revendication 5 ***caractérisée* en ce que** la bride (14) comporte sur sa face supérieure une gorge (15) s'étendant diamétralement, ladite gorge (15) recevant l'axe de pédale (1).

7. Pédale suivant l'une quelconque des revendications 5 ou 6 ***caractérisée* en ce que** la bride (14) comporte des moyens de fixation du support de chaussure.

8. Pédale suivant l'une quelconque des revendications 1 à 7 ***caractérisée* en ce qu'**elle comporte au moins un codeur de position angulaire (20).

9. Pédale suivant la revendication 8 ***caractérisée* en ce que** le codeur de position angulaire (20) s'étend dans une embase (21) sensiblement cylindrique solidaire d'une anse (6) du corps de pédale (3).

10. Pédale suivant la revendication 4 ***caractérisée* en ce que** les jauges de déformation (13) sont connectées à une carte électronique (22), s'étendant dans le corps de pédale (3) et comportant six amplificateurs d'instrumentation permettant de délivrer les signaux de mesure sur une plage de tension comprise entre +10V et -10V.

11. Pédale suivant la revendication 10 ***caractérisée* en ce que** la carte électronique (22) comporte un connecteur (23) faisant saillie du corps de pédale (3) à travers une lumière (24) afin de permettre une lecture des mesures au moyen d'un dispositif connecté à ladite carte électronique (22).

## Patentansprüche

1. Pedal für Fahrräder oder Ähnliches, wobei es eine Pedalachse (1) mit einer mittigen Pedalachse (2), einen Pedalkörper (3) und eine Schuhhalterung (4), die fest mit dem Pedalkörper (3) verbunden ist, wobei die Schuhhalterung (4) dazu befähigt ist, mit einem entsprechend geformten Keil zusammenzuwirken, der fest mit einem Radfahrerschuh verbunden ist, sowie mindestens einen Sensor umfasst, **dadurch *gekennzeichnet,* dass** der Pedalkörper (3) eine zylindrische Form aufweist, deren Boden geschlossen ist und deren obere Kante einen ringförmigen Kragen (5) aufweist, an dessen Rand sich zwei Bügel (6, 7) erstrecken, die sich diametral gegenüberstehen und jeweils mit einer kreisförmigen Ausnehmung (8, 9) versehen sind, in welcher sich die Pedalachse (1) erstreckt, wobei sich die Pedalachse (1) rechtwinklig zur Drehachse des Pedalkörpers (3) erstreckt, und dadurch, dass es einen Prüfkörper (10) aufweist, der sich in dem zylindrischen Pedalkörper (3) erstreckt mit mindestens 6 Verformungsmessorganen versehen ist.

2. Pedal nach dem vorhergehenden Anspruch, **dadurch *gekennzeichnet,* dass** der Prüfkörper (10) aus zwei konzentrischen Ringen (11, 12) besteht, die durch Abstandsstücke (13) verbunden sind.

3. Pedal nach Anspruch 2, **dadurch *gekennzeichnet,* dass** der Prüfkörper (3) aus zwei konzentrischen Ringen (11, 12) besteht, die durch drei Paare von Abstandsstücken (13) verbunden sind, wobei jedes Paar von Abstandsstücken (13) eine V-Form aufweist und sich in einer Ebene erstreckt, die im Wesentlichen parallel zur Drehachse der Ringe (11, 12) ist.

4. Pedal nach einem beliebigen der Ansprüche 2 oder 3, **dadurch *gekennzeichnet,* dass** jedes der Abstandsstücke (13) mit einem Verformungsmessorgan versehen ist.

5. Pedal nach einem beliebigen der Ansprüche 1 bis 4, **dadurch *gekennzeichnet,* dass** es einen Flansch (14) aufweist, der aus einem kreisförmigen Bauteil besteht, das dazu befähigt ist, den Pedalkörper (3) zu schließen.

6. Pedal nach Anspruch 5, **dadurch *gekennzeichnet,* dass** der Flansch (14) auf seiner Oberseite eine Hohlkehle (15) aufweist, die sich diametral erstreckt, wobei die Hohlkehle (15) die Pedalachse (1) aufnimmt.

7. Pedal nach einem beliebigen der Ansprüche 5 oder 6, **dadurch *gekennzeichnet,* dass** der Flansch (14) Mittel zur Befestigung der Schuhhalterung aufweist.

8. Pedal nach einem beliebigen der Ansprüche 1 bis 7, **dadurch *gekennzeichnet,* dass** es mindestens einen Winkelstellungsgeber (20) aufweist.

9. Pedal nach Anspruch 8, **dadurch *gekennzeichnet,* dass** der Winkelstellungsgeber (20) sich in einem Ansatzstück (21) erstreckt, das im Wesentlichen zylindrisch ist und fest mit einem Bügel (6) des Pedalkörpers (3) verbunden ist.

10. Pedal nach Anspruch 4, **dadurch *gekennzeichnet,* dass** die Verformungsmessorgane (13) an eine Leiterplatte (22) angeschlossen sind, die sich in dem Pedalkörper (3) erstreckt und sechs Geräteverstärker umfasst, welche es ermöglichen, Messsignale in einem Spannungsbereich von +10 V bis -10 V auszugeben.

11. Pedal nach Anspruch 10, **dadurch *gekennzeichnet,* dass** die Leiterplatte (22) ein Anschlussstück (23) aufweist, welches durch eine Öffnung (24) aus dem Pedalkörper (3) hervorsteht, um mittels einer Vorrichtung, die mit der Leiterplatte (22) verbunden ist, ein Ablesen der Messwerte zu ermöglichen.

## Claims

1. A pedal of bicycle or the like comprising: a pedal spindle (1) having a central pedal spindle (2), a pedal body (3) and a shoe support (4) secured to said pedal body (3), said shoe support (4) being suitable for co-operating with a cleat of corresponding shape that is secured to a cyclist's shoe, and at least one sensor, **characterized in that** the pedal body (3) has a cylindrical shape, the bottom of which is closed and the upper edge of which is provided with a an annular collar (5) at the periphery of which two eye lugs (6, 7) extend that are diametrically opposite each other and that are each provided with a circular orifice (8, 9) through which the pedal spindle (1) extends, said pedal spindle (1) extending perpendicular to the axis of revolution of the pedal body (3), and **in that** it further comprises a sensing element (10) extending in the cylindrical pedal body (3) and carrying at least 6 strain gauges.

2. A pedal according to the preceding claim, **characterized in that** the sensing element (10) is made up of two concentric rings (11, 12) connected by spacers (13).

3. A pedal according to claim 2, ***characterized* in that** the sensing element (3) is made up of two rings (11, 12) connected by three pairs of spacers (13), each pair of spacers (13) having a V-shape and extending in a plane that is substantially parallel to the axis of revolution of the rings (11, 12).

4. A pedal according to any one of claim 2 or 3, ***characterized* in that** each spacer (13) is equipped with a strain gauge.

5. A pedal according to any one of claims 1 to 4, ***characterized* in that** it further comprises a flange plate (14) constituted by a circular part suitable for closing the pedal body (3).

6. A pedal according to claim 5, ***characterized* in that**, in its top face, the flange plate (14) has a groove (15) extending diametrically, said groove (15) receiving the pedal spindle (1).

7. A pedal according to any of of claim 5 or 6, ***characterized* in that** the flange plate (14) is provided with fastening means for fastening to the shoe support.

8. A pedal according to any one of claims 1 to 7, ***characterized* in that** it further comprises at least one angular position encoder (20).

9. A pedal according to claim 8, ***characterized* in that** the angular position encoder (20) extends in a substantially cylindrical base (21) that is secured to an eye lug (6) of the pedal body (3).

10. A pedal according to claim 4, ***characterized* in that** the strain gauges (13) are connected to an electronic card (22), extending in the pedal body (3) and including six instrumentation amplifiers enabling to deliver the measurement signals over a voltage range extending from +10 V to -10 V.

11. A pedal according to claim 10, ***characterized* in that** the electronic card (22) includes a connector (23) projecting from the pedal body (3) through a slot (24) in order to enable the measurements to be read by means of a device connected to said electronic card (22).
